# EUROPEAN PATENT SPECIFICATION

(11) **EP 4 586 863 B1**
(45) Date of publication and mention of the grant of the patent: **27.05.2026**
(21) Application number: 23768520.1
(22) Date of filing: 08.09.2023
(51) Int. Cl.: A47J 31/36, B65D 85/804, B65D 65/46

(54) **BEVERAGE EXTRACTION SYSTEM**
GETRÄNKEEXTRAKTIONSSYSTEM
SYSTÈME D'EXTRACTION DE BOISSON

(30) Priority: 12.09.2022 EP 22195046
(43) Date of publication of application: 23.07.2025
(73) Proprietor: Société des Produits Nestlé S.A., 1800 Vevey (CH)
(72) Inventor: ABRAHAM, Sophie, 25160 Remoray (FR); BAUDOZ, Matthieu, 25160 Labergement Sainte Marie (FR); DOGAN, Nihan, 1090 LA CROIX-s/LUTRY (CH); TRULLARD, Aurélien, 25370 Jougne (FR)
(86) International application number: PCT/EP2023/074716
(87) International publication number: WO 2024/056537

(56) References cited:
- WO-A2-2020/114995
- US-A1- 2009 199 518
- US-A1- 2013 001 251

## Description

### Field of the invention

The present invention relates to the field of preparation of beverages with a system including a single-serve container comprising a beverage ingredient and a machine that has an extraction chamber in which the container can be inserted and extracted.

### Background of the invention

Single serve containers for the automatic preparation of beverages encompass various formats of containers that can be relatively soft or flexible, such as pods, and made of any material, recyclable or non-recyclable, biodegradable or non-biodegradable, such as aluminium, plastic, filter paper.

WO 2020/089404 describes such a system extracting beverages from such soft or flexible pods. These pods present asymmetrical shape relatively to the plane comprising the flange of the pod. The extraction device is provided with an extraction chamber configured to adapt its size to the shape and volume of the pod introduced. The extraction chamber comprises :
- an upstream part defining a cage and bearing an upstream piercing arrangement for opening the bottom wall of the pod and a liquid injector to supply liquid through the opened bottom wall, and
- a downstream part defining a plate that comprises a downstream plane piercing arrangement for opening the lid of the pod.

During the process of extraction, water is supplied in the pod through the opened bottom wall which increases pressure inside the pod. The downstream plane piercing arrangement is designed for opening the lid by relative engagement with the lid under the effect of this rise in pressure of the injected liquid in the pod body chamber and inflation of the lid against the piercing arrangement.

US 2013/001251 A1 discloses a system comprising a beverage preparation machine and a pod containing a beverage ingredient, preferably roast and ground coffee, wherein the pod comprises a first and a second enclosing walls, said first and second pod enclosing walls defining a chamber for enclosing the beverage ingredient, and wherein the beverage preparation machine comprises an extraction device for extracting a beverage from the pod and said extraction device comprises:
- upstream and downstream pod enclosing parts relatively movable between an open position for inserting and/or ejecting the pod and a closed position for forming an extraction chamber enclosing the pod during extraction,- the upstream part bearing: an upstream piercing arrangement for opening the first enclosing wall of the pod and a liquid injector,
- the downstream part comprising a downstream piercing arrangement for opening the second enclosing wall of the pod, said downstream piercing arrangement comprising a plate, wherein the surface of said plate turned to the second wall of the pod comprises opening elements rising from said surface, and said plate comprises traversing holes to evacuate the beverage dispensed from the opened second wall and wherein, during the preparation of a beverage, the extraction device is configured:
- in a first step, to enclose the pod between the upstream and downstream pod enclosing parts, and
- then, in a second step, to introduce liquid inside the enclosed pod through the liquid injector.

In order to respect environment, it is required today to use pods made of biodegradable and/or compostable materials, in particular essentially made of paper.

These new materials lead to specific problems during the beverage preparation and the handling of the pod in the extraction device, in particular optimal extraction of roast and ground coffee is hardly obtained, coffee being either over extracted or under extracted.

An object of the invention is to address the above existing problem.

### Summary of the invention

There is provided a system comprising a beverage preparation machine and a pod containing a beverage ingredient, preferably roast and ground coffee,
wherein the pod comprises a first and a second enclosing walls, said first and second pod enclosing walls defining a chamber for enclosing the beverage ingredient, and
wherein said first and second pod enclosing walls of the pod are made of a multilayer paper material, said multilayer paper material comprising at least one layer of paper assembled with at least one layer of plastic, preferably a compostable plastic layer, and
wherein said multilayer paper material is oriented so that at least one layer of plastic faces the internal part of the chamber of the pod, and
and
wherein the beverage preparation machine comprises an extraction device for extracting a beverage from the pod, and said extraction device comprises :
   - upstream and downstream pod enclosing parts relatively movable between an open position for inserting and/or ejecting the pod and a closed position for forming an extraction chamber enclosing the pod during extraction,
   - the upstream part bearing :
      . an upstream piercing arrangement for opening the first enclosing wall of the pod and
      . a liquid injector,
   - the downstream part comprising a downstream piercing arrangement for opening the second enclosing wall of the pod, said downstream piercing arrangement comprising a plate wherein
      . the surface of said plate turned to the second wall of the pod comprises opening elements rising from said surface, and
      . said plate comprises traversing holes to evacuate the beverage dispensed from the opened second wall,
      and
wherein, during the preparation of a beverage, the extraction device is configured :
   - in a first step, to enclose the pod between the upstream and downstream pod enclosing parts, and
   - then, in a second step, to introduce liquid inside the enclosed pod through the liquid injector,
wherein the opening elements of the downstream piercing arrangement and the multilayer material of the second enclosing wall of the pod are designed so that :
   - in the first step, the opening elements pierces partially only the rmultilayer paper material so that at least the layer of plastic of the rmultilayer paper material facing the internal part of the chamber of the pod is not pierced, and
   - during the second step, the opening elements pierces totally the rmultilayer paper material by relative engagement under the effect of the rise in pressure of the injected liquid in the pod and inflation of the second enclosing wall lid against the opening elements.

The extraction device of the system is typically comprised in a beverage preparation machine configured for receiving pods. Preferably it is a coffee machine, though the machine can be designed to prepare tea, chocolate or soup for instance, depending on the ingredient enclosed in the pod. In particular, the machine is arranged for preparing within the extraction chamber a beverage by passing water, preferably hot, or another liquid through a pod containing an ingredient of the beverage to be prepared, preferably roasted ground coffee, or eventually tea leaves or instant coffee or instant tea or chocolate or cacao or milk powder or dehydrated soup. In the preferred embodiment, the beverage ingredient is roasted and ground coffee.

The device is configured for extracting a beverage ingredient contained in a pod by supplying an extraction liquid such as water into the pod. The device comprises upstream and downstream pod enclosing parts relatively movable between an open position for inserting and/or ejecting such pod and a closed position for forming an extraction chamber enclosing the pod during beverage ingredient extraction.

Typically, the pod can be inserted into the device from above under the effect of gravity. Ejection or removal of the pod upon reopening of the enclosing parts may also be driven by gravity.

The upstream and downstream pod enclosing parts are relatively movable between an open position for inserting and/or ejecting the pod and a closed position for forming an extraction chamber enclosing the pod during extraction. In one particular embodiment. upstream and downstream pod enclosing parts are relatively translatable along a longitudinal axis (XX').

The upstream part or injecting part comprises an upstream piercing arrangement in the form of one or more piercers for piercing the first wall of the inserted pod and at least one liquid injector for supplying liquid through the pierced first wall of the pod.

This upstream piercing arrangement can comprise piercers in the form of blades. These blades ca be designed and positioned to pierce the first wall of the pod body when the upstream and downstream pod enclosing parts are brought to the closed position. The liquid injector, such as a shower at the upstream part of the cage, can introduce the extracting liquid through the pre-pierced openings.

In an alternative, this upstream piercing arrangement can comprise at least one hollow needle configured to pierce the wall of the bottom of the pod body and the hollow needle(s) can comprise an internal axial channel for guiding the extracting liquid in the chamber of the pod.

The downstream part or dispensing part defines a downstream piercing arrangement for opening the second wall of the pod when the extracting liquid is introduced inside the pod. Usually, this downstream plane piercing arrangement is designed for opening the second wall by relative engagement with the second pod enclosing wall under the effect of the rise in pressure of the injected liquid in the chamber of the pod and inflation of the second wall against the piercing arrangement. This downstream plane piercing arrangement comprises a plate, that is preferably rigid, and that comprises opening elements like a plurality of relief and recessed elements such as spikes, that can present the shape of cones on its surface turned to the second wall.

In addition, the plate comprises traversing holes to evacuate the beverage dispensed from the opened second wall to a tube or nozzle collecting and dispensing beverage to a drinking cup.

Usually, the shapes of the upstream and enclosing parts of the extraction device are defined according to the shape of the pod configured to be extracted therefrom.

In a first embodiment of the system :
- the pod is configured so that :
   . the first enclosing wall is a pod body, said pod body comprising a side wall and a bottom wall defining the chamber and a circumferential annular body flange, said pod body containing the beverage ingredient, and
   . the second enclosing wall is a top lid attached to the circumferential flange, said top lid closing the top opening of the pod body,
   and
- the extraction device is configured so that :
   . the upstream part defines a cage designed to enclose the pod body and bears an upstream piercing arrangement for opening the bottom wall of the pod,
   . the downstream part defines a plate transverse to the longitudinal axis (XX'), said plate comprising a downstream piercing arrangement for opening the lid of the pod.

In this first embodiment, the pod presents an asymmetrical shape.

When a pod is present, the pod body is surrounded by the cage of the upstream part and the pod lid extends along the downstream piercing arrangement. The asymmetrical shape of the pod presents the advantage of forcing the operator to position the pod correctly inside the extraction device, precisely with the lid in front of the downstream piercing arrangement.

In a second embodiment of the system :
- the pod is configured so that :
   . each of the first and second enclosing walls is a pod body, said pod body comprising a side wall and a bottom wall defining half of the chamber and a circumferential annular body flange,
   . the circumferential annular body flanges of said pod bodies are attached together,
   and
- the extraction device is configured so that the upstream and downstream parts define together a cage for enclosing the pod.

In this second embodiment, generally, the upstream and downstream enclosing parts present similar shapes corresponding to said half-shells and the pod is symmetric along the plane defined by the flange. Accordingly, this pod can be indifferently oriented with the first enclosing all or the second enclosing wall facing the upstream pod enclosing part or the downstream enclosing part. For this reason, preferably both enclosing walls present the same nature of material as described below.

Generally, the extracting device can comprise an insertion section for inserting the pod in the device. Generally, this section is positioned above the upstream and downstream pod enclosing parts so that the pod is inserted by gravity between these two parts. Depending on the shape of the pod, this insertion section can be designed so that the user is urged to position the pod with its lid facing the downstream piercing arrangement.

Generally, this beverage machine comprises a liquid supply system connected to the upstream enclosing part. This liquid supply system can comprise :
- a liquid supply such as a liquid tank,
- pumping means to drive liquid from the liquid supply to the extraction device,
- heating and/or cooling means to adapt the temperature of the liquid before it is introduced inside the pod.

The liquid is usually water.

This beverage machine usually comprises an actuator, either manual or motorized, to actuate the movement of the enclosing parts of the extraction device
Usually, this beverage machine comprises a control unit configured to control the supply of liquid to the extraction device and optionally the movement of the enclosing parts of the extraction device.

Usually, this system is configured to extract a coffee beverage from pod comprising roast and ground coffee. In this process of preparation of a coffee beverage from the system, at least the following steps occur :
- in a preliminary step, the pod is inserted between the upstream and downstream pod enclosing parts that are positioned in their opened position. This operation can be operated manually by the user or automatically by a motor of the beverage machine. Usually, the pod is received in a pod holder that keeps it between the two pod enclosing parts which are hold far from each other in their opened positions.
- then, in a first step, the upstream and/or downstream pod enclosing parts are moved relatively one to the other to their closed position in order to form the extraction chamber that encloses the pod for the coming extraction. At that step, the external surfaces of the first and second walls of the pod are in contact with the surfaces of the upstream piercing arrangement and the downstream piercing arrangement. Usually, the upstream piercing arrangement, such as blades or hollow needle, pierces the first enclosing wall of the pod, except if this upstream piercing arrangement is retractable and can be moved in a further step.
- then, in a second step, the extraction water is injected by the liquid injector through holes pierced inside the first wall of the pod by the upstream piercing arrangement. As water is being injected, it fills the chamber of the pod. Pressure rises until the second wall of the pod opens. Opening happens when the pressure makes the second wall inflate so much that its engagement with the downstream piercing arrangement tears or pierces it. Once tearing happens, coffee extracted by pressurised water from roast and ground coffee flows and is dispensed from the machine. Depending on the nature of the second enclosing wall, tearing may not happen at the optimal pressure, which directly impacts the quality of the final coffee beverage.

In the present system, the first and second pod enclosing walls of the pod are made of a multilayer paper material made of layers of different material that comprises at least one layer of paper assembled with at least one layer of a plastic.

Preferably, all the components of the pod are compostable, in particular all the components of this multilayer paper material.

This plastic layer reinforces the protection of the paper layer against liquid, gas and moisture for the beverage ingredient.

In the pod, the multilayer paper material is oriented so that at least one layer of plastic faces the internal part of the chamber of the pod.

In the present system, the opening elements of the downstream piercing arrangement and the multilayer material of the second enclosing wall of the pod are designed in accordance with each other so that :
- in the first step of the preparation of a beverage, the opening elements pierce partially only the rmultilayer paper material so that at least the layer of plastic of the rmultilayer paper material facing the internal part of the chamber of the pod is not pierced, and
- during the second step of the preparation of a beverage, the opening elements pierces totally the rmultilayer paper material by relative engagement under the effect of the rise in pressure of the injected liquid in the pod and inflation of the second enclosing wall lid against the opening elements.

Accordingly, the system is configured to enable a progressive opening and interaction of the second pod enclosing wall during the beverage preparation, in particular during a coffee preparation from roast and ground coffee.

During the first step of enclosing the pod, the opening elements pierce only a part of the paper layer or preferably the complete paper layer of the rmultilayer paper material but the opening elements do not pierce the plastic layer facing the internal part of the chamber of the pod. It means that the opening elements do not pierce completely transversally the second pod enclosing wall which guarantees that the pod remains tight during filling with the extraction fluid and that this fluid can fill the pod during the second step of the preparation so that pressure can rise in the pod and that the production of crema from roast and ground coffee can be obtained.

This partial piercing of the second pod enclosing wall guarantees too that the opening elements can pierce the second enclosing wall totally when pressure rises and inflates the pod. Due to the fact that the layer of paper of the multilayer paper material has been already pierced in the first step, the piercing of the other layer of plastic of the multilayer paper material is easier than in a case where all the layers (of paper and of plastic) of the multilayer material would need to be pierced under the effect of the rise in pressure of the injected liquid in the pod and inflation of the second enclosing wall lid against the opening elements.

Preferably, the opening elements of the downstream piercing arrangement and the multilayer material of the second enclosing wall of the pod are designed so that, during the second step, the opening elements pierce totally the rmultilayer paper material by relative engagement with the second enclosing wall under the effect of the rise in pressure of the injected liquid in the pod and inflation of the second enclosing wall lid against the opening elements after the pressure inside the pod reaches at least 3 bar, preferably at least 4 bars.

Accordingly, with a pressure opening above 4 bars, roast and ground coffee is not under-extracted.

Preferably, the opening elements of the downstream piercing arrangement and the multilayer material of the second enclosing wall of the pod are designed so that, during the second step, the opening elements pierce totally the rmultilayer paper material by relative engagement with the second enclosing wall under the effect of the rise in pressure of the injected liquid in the pod and inflation of the second enclosing wall lid against the opening elements before the pressure inside the pod reaches at most 10 bar, preferably at most 9 bars.

Accordingly, with a pressure opening below 10 bars, roast and ground coffee is not over-extracted with a too long flow time for dispensing coffee in the cup or with a risk of flow stop, coffee being not dispensed at all.

In the preferred embodiment, the opening elements of the downstream piercing arrangement are designed so as to present a tip end, and
wherein the layer of plastic facing the internal part of the chamber of the pod :
- is stretchable by the tip end of the opening elements in the first step of the beverage preparation, and
- is pierceable by the tip end of the opening elements in the second step of the beverage preparation.

The tip ends of the opening elements are able to torn a paper like the paper layer of the multilayer material but not the plastic layer on account of the fact this plastic layer is configured to be stretchable and because the position of this plastic layer at the internal part of the chamber of the pod makes it in contact with only the top ends of the opening elements.

Yet, the ability to stretch of the plastic layer is set so that, once the extraction fluid fills the pod, the pressure of this fluid on the plastic layer makes it stretched so much on the tip end of the opening elements that this layer is finally pierced and extracted coffee is dispensed.

Preferably, the extraction device is configured so that when the pod enclosing parts are moving one to the other to enclose the pod in the extraction chamber, at least a part of the extraction device pushes the pod so that the second enclosing wall of the pod is pressed against the opening elements of the downstream piercing arrangement.

Accordingly, the tearing of the layer of paper of the second enclosing wall is improved.

Preferably, the pod contains a compacted beverage ingredient, preferably compacted roast and ground coffee.

When a part of the extraction device pushes the pod to press it against the opening elements of the downstream piercing arrangement, compacted coffee provides a counter surface that improves the tearing of the paper layer during the first step.

For example, coffee can be compacted as described in WO2020/089403 or any other process.

Usually, the layer of paper of this multilayer paper material can be a sheet of paper.

Alternatively, but preferably for the pod body, this layer of paper can be formed :
- by wet pulp moulding. Therein, the process of forming the body may comprise the step of placing pulp slurry in a mould, for example by filling the mould with the slurry or by drowning the mould in the slurry. The pulp slurry may be pressed in the mould, and the so formed body may be dried. The pulp can be a material, such as cellulose pulp, bamboo pulp, wood pulp, bagasse, non-wood pulp, cellulose based pulp or other alternative sources of pulp in any form. or
- by dry pulp moulding. Therein, the process of forming the body may comprise the step of providing a blank of preferably dried cellulose fibres. Then, the blank may be formed with a tool preferably under the application of heat and/ or water into the shape of the body.

Preferably, the layer of paper of the multilayer paper presents a grammage of at least 20 g/m², preferably at most 150 g/m². The layer of paper of the forming wall forming the body can present a higher grammage than the layer of the paper in the lid because it needs to be stretched and deformed during manufacturing.

The layer of paper of this multilayer paper material can also be identified as the primary layer in the present application.

Whatever the type of the layer of paper, this layer is assembled with at least one layer of plastic. This layer of plastic can also be identified as the secondary layer in the present application.

The layer of plastic can be selected in the list of :
- a polylactic acid (PLA) layer,
- a polybutylene succinate (PBS) layer,
- a polybutylene adipate terephthalate (PBAT) layer,
- a polyhydroxy alkanoate (PHA) layer,
- a polycaprolactone (PCL) layer,
- a layer of a polymer blend formed of any combination of above polymers.

The paper layer can be assembled with several of these different layers of plastic.

This plastic layer reinforces the protection of the paper layer against liquid, gas and moisture for the beverage ingredient.

In addition to these paper and plastic layers, preferably, the multilayer paper material can comprise an additional layer of material providing a barrier to oxygen. This layer can also be identified as the tertiary layer in the present application.

This layer can be selected in the list of :
- a polyvinyl-alcohol copolymer (PVOH) layer, in particular a butenediol-vinyl-alcohol-copolymer (BVOH) layer,
- a polyglycolic acid (PGA) layer,
- a metallization coating,
- a SiOₓ based coating,
- an AlOₓ based coating,
- a combination thereof.

In one particular embodiment where this additional or tertiary layer is a plastic polymer, the secondary and tertiary layer can be assembled together as a multilayer plastic film. In this embodiment, this multilayer layer of plastic can comprise the internal tertiary layer positioned between two external secondary layers.

Preferably, the internal tertiary layer is a polyvinyl alcohol copolymer (PVOH) film, in particular a butenediol vinyl alcohol (BVOH) film.

Preferably, the external secondary polymer layers can be chosen among films of polylactic acid (PLA), polybutylene succinate (PBS), polyhydroxyalkanoates (PHA), polybutylene adipate terephthalate (PBAT) and starch. The secondary film can also be composed of a polymer blend formed of any combination of these listed polymers,

Preferably, these three layers are attached by means of two intermediate adhesive layers, preferably an anhydride modified polymer resin. Generally, this multilayer layer of plastic is produced by co-extrusion.

The multilayer paper material can further comprise an ink printing on one of its surfaces. The ink printing is preferably food safe.

The multilayer paper material can further comprise a protective layer at its most external surface. This protective layer can provide a protection in case of ink printing. In that case this protective layer is preferably transparent.

In addition, depending on the quality of the used paper, this protective layer can provide the function of preventing paper from sticking to the downstream piercing arrangement with the risk that some small pieces of torn paper remain attached to the downstream piercing arrangement when and after the pod is ejected from the extraction device.

The assembly of the different layers of the material can be obtained by any type of process depending on the nature of the layers such as :
- co-lamination or co-extrusion of the layers,
- coating or deposit of one compound on another layer to form a layer on the other,
- co-extrusion coating.

In addition, the different layers can be bound one to the other by an intermediate adhesive layer.

Generally, the first and the second enclosing walls are made of the same multilayer paper material except that, at least for the second enclosing wall, the external surface of the multilayer paper material is covered by a protective layer. Depending on the type of pod, all the enclosing walls can be covered by this protective layer, this is particularly the case when the pod can be introduced in whatever orientation inside the extraction device, like for the second embodiment of the pod described above.

This protective layer can be :
- a polylactic acid (PLA) layer,
- a cellulosic layer (cellophane),
- a polybutylene succinate (PBS) layer,
- a polybutylene adipate terephthalate (PBAT) layer,
- a polyhydroxy alkanoate (PHA) layer,
- a polycaprolactone (PCL) layer,
- a layer of a polymer blend formed of any combination of the above listed polymers.

Preferably, this protective layer is a film comprising regenerated cellulose, in particular Cellophane^{™}.

In the present application :
- the term "pod" is used to broadly designate any kind of single-dose container suitable for preparing beverages or other edible products such as capsule, cartridge, portioned or individual package without limitation to the shape of this container, in particular the shape of the body, or the types of piercing means needed to extract the beverage therefrom.
- the expression "compostable material" may be understood as any material that can be broken down into environmentally innocuous products by (the action of) living things (such as microorganisms, e.g. bacteria, fungi or algae). This process could take place in an environment with the presence of oxygen (aerobic) and/or otherwise without presence of oxygen (anaerobic). This may be understood, for example, as meaning that composting can be carried out without reservation. In particular, at the end of a composting process there are no residues of the material, which may be problematic for the environment, or any non-biodegradable components. International standards, e.g. EU 13432 or US ASTM D6400, specify technical requirements and procedures for determining compostability of a material.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

Specific embodiments of the invention are now described further, by way of example, with reference to the following drawings in which :
- Figures 1A and 1B are views of pods used in the system of the present invention according to a first embodiment,
- Figures 1C and 1D are views of pods used in the system of the present invention according to a second embodiment,
- Figure 1E schematically illustrates the multilayer paper material of the pods,
- Figures 2A and 2B are side and top views of an extraction device used in the system of the present invention in the closed position,
- Figure 3A is an isolated side view of the upstream and downstream pod enclosing parts of the extraction device in the opened position,
- Figure 3B is an isolated side view of the upstream and downstream pod enclosing parts of Figure 3A in the closed position,
- Figure 3C is an isolated side view of the upstream and downstream pod enclosing parts of Figure 3A in the position of ejection of the pod,
- Figure 4A is an isolated perspective view of the upstream pod enclosing part of Figure 3A,
- Figure 4B is an isolated perspective view of the piercing arrangement of the downstream pod enclosing part of Figure 3A,
- Figure 5 is a magnified view of the opening elements of the piercing arrangement of Figure 4B.
- Figure 6 is a schematic view of the fluid system of the beverage preparation machine,
- Figure 7 provides curves in relation with the preparation of coffee with a system according to the invention.

### Detailed description of exemplary embodiments

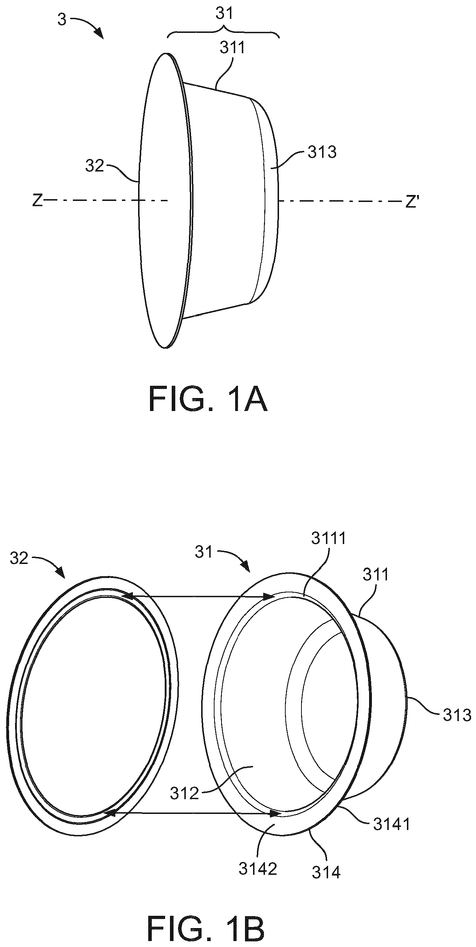

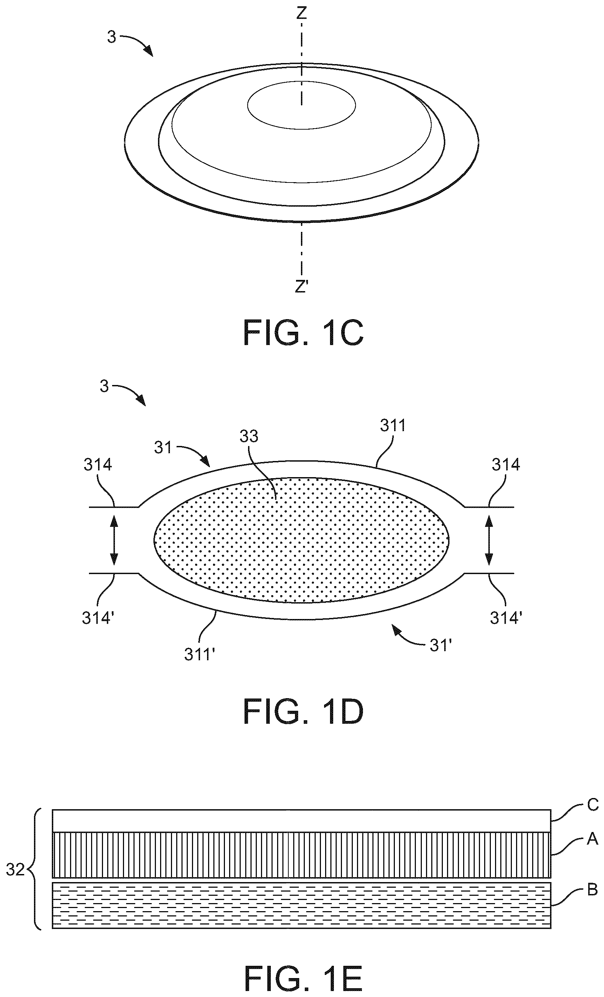

**Figures 1A** (perspective view) **and 1B** (exploded view) illustrate a first embodiment of the pods 3 that can be used in the extraction device of the invention.

The pod 3 comprises a pod body 31 with one sidewall 311 that extends axially from a bottom wall 313 towards a top. The sidewall 311 extends towards a top opening 312. At the top opening 312, the body comprises a circumferential annular flange 314 that extends radially outward from the sidewall 311 along the circumference of the opening 312.

The flange comprises a top surface 3142 facing the top and a bottom surface 3141.

Generally, any transversal cross section of the body is circular from the bottom to the top and the flange is circular too.

The body delimits a chamber for containing a beverage ingredient.

This beverage ingredient packed is preferably an ingredient able to be extracted under pressure like roast and ground coffee. Preferably, this roast and ground coffee is compacted. In a less preferred manner, the beverage ingredient can be infused like tea leaves or dissolved like a water soluble powder ingredient such as : instant coffee powder, milk powder, cream powder, instant tea powder, cocoa powder, soup powder, fruit powder or mixture of said powders or even a soluble liquid ingredient or a beverage concentrate such as a syrup or milk concentrate. The powders can be compacted, agglomerated or sintered.

The capsule comprises a lid 32 that is fixed, sealed or attached to at least a part of the top surface 3142 of the circumferential flange and accordingly covers and closes the top opening 312.

The bottom wall 313 is adapted to be pierced so that liquid can be injected in the pod through the pierced openings, as described further below. In Figures 1A-B, this bottom is rather flat, yet the bottom can present other shapes such conical ore frustoconical shapes.

The lid 32 is adapted to be opened by relative engagement with a piercing arrangement under the effect of the liquid pressure increase inside the pod during injection of liquid.

The pod shape is symmetric relatively to the central axial axis ZZ' extending from the bottom wall to the lid and the pod shape is asymmetrical relatively to the plane of the lid 32 and the flange 314.

Preferably the pods 3 are essentially made of a biodegradable or compostable material, preferably a home compostable material since extracted coffee cakes can easily be made composted at home.

Preferably, the body and the lid of the pod are made of a multilayer paper material, that comprises a layer of paper coated with at least a layer of plastic.

In this multilayer paper material, the paper layer is formable, i.e. a sheet of paper can be given a three-dimensional shape that is the form of the body of the above described pod. Contrary to common pods made of filter paper, this paper is thick and keep the three-dimensional shape provided during a shaping step of manufacturing of the pod.

Preferably, the paper layer of the pod can have a grammage of at least 20 g/m², preferably at most 150 g/m². The paper of the body can present a higher grammage than the paper of the lid because it needs to be stretched and deformed during manufacturing.

The grammage of the paper of the body can be comprised between 80 and 150 g/m².

The lid can present a grammage comprised between 20 and 120 g/m².

In the multilayer paper material, the layer of plastic provides additional properties such as air barrier, stretchable or deformable properties, for example as described in WO 2020/114995 or WO 2022/022899.

In fact, in order to shape the paper as a container for the beverage and to create a barrier to protect the beverage ingredient, the paper must be sufficiently thick. In addition, to create a barrier to atmosphere, in particular oxygen to which roast and ground coffee is particularly sensitive, the multiplayer paper comprises compostable layers of plastic. Sealants layers are often necessary to attach the different layers and prevent delamination.

According to the preferred embodiment, the layer of plastic of the multilayer paper is a multilayer layer of plastic comprising an internal barrier film positioned between two external polymer films, wherein :
- the internal barrier film is a butenediol vinyl alcohol (BVOH) film (tertiary layer),
- the external polymer films can be chosen among films of polylactic acid (PLA), polybutylene succinate (PBS), polyhydroxyalkanoates (PHA), polybutylene adipate terephthalate (PBAT) and starch (secondary layer).

The multilayer paper material of the lid can comprise at least one additional layer that the paper material of the body does not necessary comprise. Yet, it is possible that the multilayer paper materials of the lid and the body are the same too.

Precisely, the external surface of the multilayer paper material of the top lid can be covered by a protective layer. According to the preferred embodiment, this protective layer is a film comprising regenerated cellulose. Like the layer paper, this protective layer is xtorn by the downstream piercing arrangement during the first step.

**Figure 1E** schematically illustrates the multilayer paper of the lid 32 comprising from the internal surface facing the chamber to the external surface facing the outside of the pod :
- a layer of plastic B with barrier properties ,
- a layer of plastic A,
- optionally a protective layer C.

**Figures 1C** (perspective view) **and 1D** (exploded view) illustrate a second embodiment of the pods 3 that can be used in the extraction device of the invention.

The pod comprises the first and second enclosing walls 31, 31' that are identical : each of them comprise is a pod body 311, 311', said pod body defining half of the chamber and a circumferential annular body flange 314,314', and
. the circumferential annular body flanges of said pod bodies are attached together so as to delimit a chamber for containing the beverage ingredient 33.

With this second embodiment, the pod shape is symmetric relatively to the central axial axis ZZ' extending from the bottom wall to the lid and relatively to the plane of the attached flanges 314, 314'. Consequently, the pod can be indifferently oriented inside the extraction device with the first enclosing all 31 or the second enclosing wall 31' facing the upstream pod enclosing part. For this reason, it is preferable that both enclosing parts 31, 31' present the same the multilayer paper material with the external surface covered by the protective layer C as illustrated in Figure 1E.

Below description relates to an extraction device that can be used with the above pods 3 according to the first embodiment of Figure 1A, 1B in an advantageous manner.

For the pods according to the second embodiment, below description applies wit the difference that the extraction device must be adapted to receive such pods. For example, the extraction device described in WO2007/135135, WO2004/071259, WO2013026844 or EP1767129 can be used.

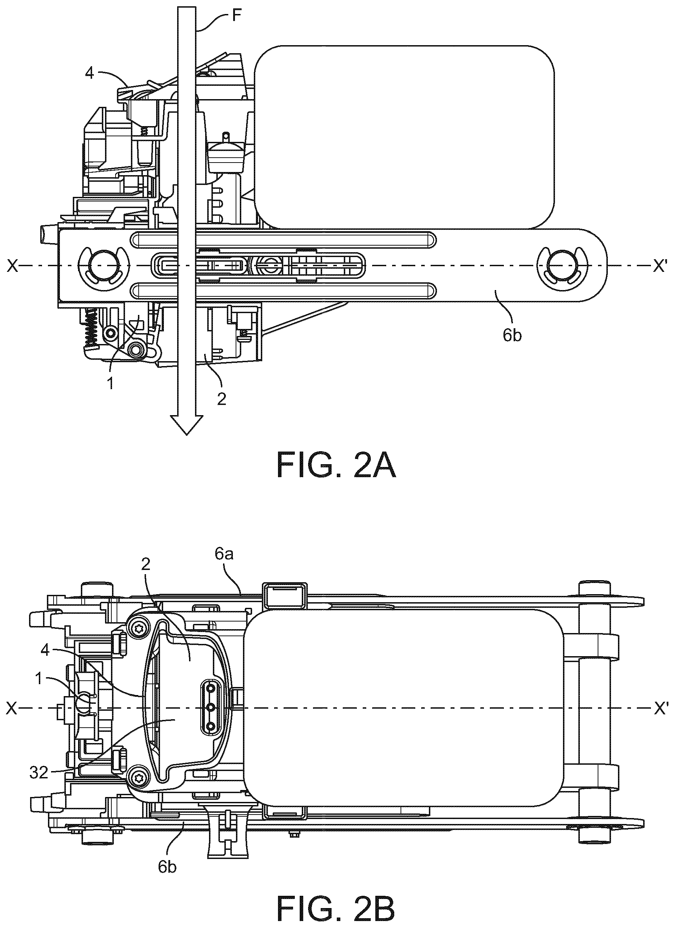

**Figure 2A** is a side view of an extraction device according to the invention comprising an upstream pod enclosing part 2 and a downstream pod enclosing part 1 relatively translatable along a longitudinal axis XX'. Usually, this axis XX' is essentially horizontal. In Figure 2A, these two parts are in a closed position and form an extraction chamber configured to enclose a pod during extraction. The pod is introduced through an insertion section 4 positioned above the two enclosing parts 1, 2, from which it can fall by gravity to these two enclosing parts 1, 2. After extraction, the pod can fall by gravity again below these two enclosing parts 1, 2 when they move apart one from the other. The arrow F illustrates the movement of the pod from the insertion inside the extraction device to the ejection from said device.

The two pod enclosing parts 1, 2 are hold and movable between two lateral and longitudinal metal sheets 6a, 6b. At least one of these parts is movable in translation between these two sheets in order to assess different relative and functional positions. In the preferred illustrated embodiments, the downstream enclosing part 1 is fixed and only the upstream enclosing part 2 is movable back and forth along the longitudinal axis XX'.

**Figure 2B** is a top view of the extraction device in the same relative positions of the upstream pod enclosing part 2 and the downstream pod enclosing part 1. The insertion section 4, in particular its housing, is designed to enable the introduction of the pod 2 with its lid 32 facing the downstream pod enclosing part 1 and accordingly the piercing arrangement 12 of said enclosing part as developed below. Consequently, the user is urged to position correctly the asymmetric pod 3 inside the extraction device.

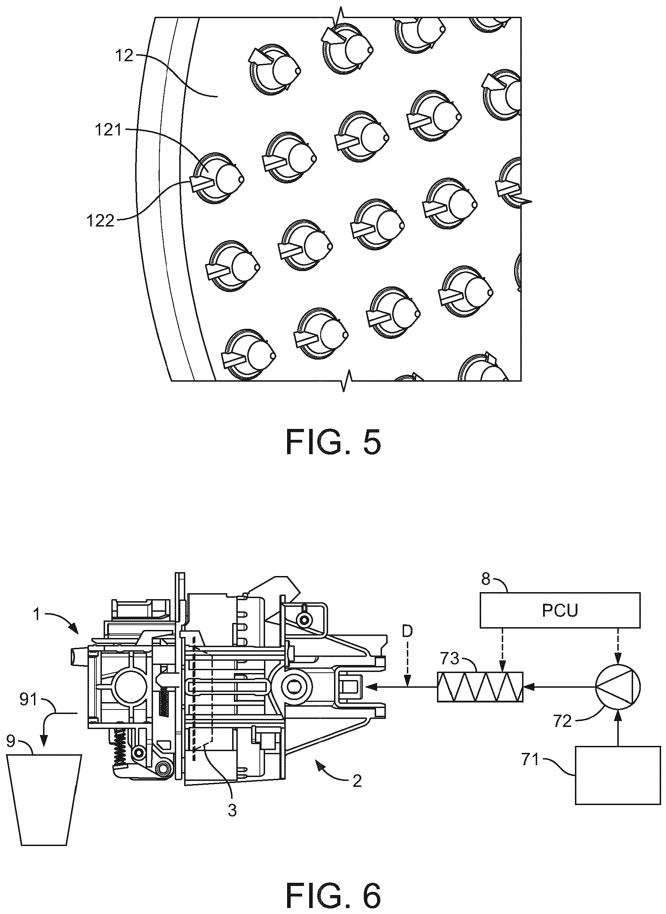

As illustrated in **Figure 6****,** in the beverage preparation machine that comprises the extraction device, the upstream pod enclosing part, precisely the liquid injector 25, is connected with a supply of liquid, preferably pressurised water. This liquid supply system usually comprises :
- a liquid supply such as a liquid tank 74,
- a pump 72 to drive liquid from the liquid supply to the liquid injector 25,
- heating and/or cooling means 73 to adapt the temperature of the liquid before it is introduced inside the pod by the liquid injector.

This beverage machine comprises a control unit 8 configured to the supply of liquid to the extraction device.

The upstream pod enclosing part is designed to collect the beverage 91 prepared from the extraction of the pod and dispense it in a drinking cup 9 by means of a dispensing pipe

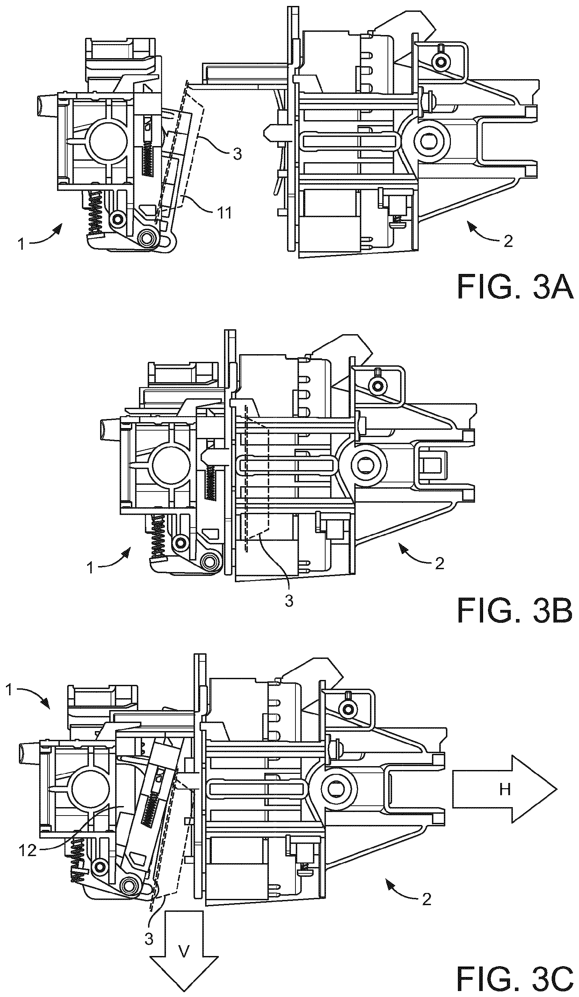

**Figures 3A-3C** are isolated side views of the upstream and downstream pod enclosing parts 1, 2 of the extraction device of Figures 2A, 2B in different relative and functional positions. In these isolated views, the insertion section 4 and the longitudinal sheets 6a, 6b were removed for a better vision of the different elements of the parts 1, 2 . In addition, the position of the pod 3 is schematically illustrated in dotted lines.

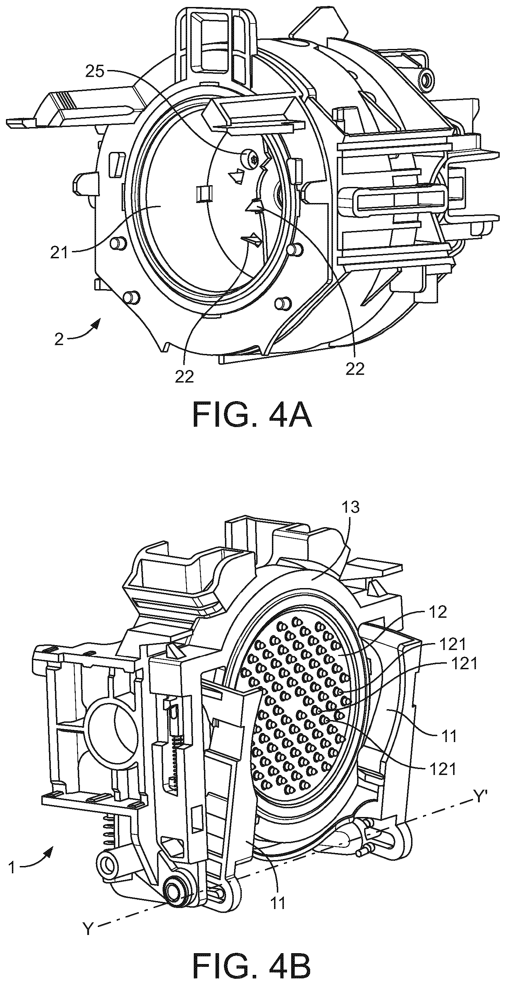

In **Figure 3A****,** the upstream and downstream pod enclosing parts 1, 2 are positioned in the open position for inserting a pod from the upper side. A pod holder 11 is visible in front of the downstream pod enclosing part 1 in a receiving position for receiving and holding the pod as further described below in relation with Figure 4A.

In **Figure 3B****,** the upstream and downstream pod enclosing parts 1, 2 are positioned in the closed position and form an extraction chamber enclosing a pod during extraction.

**Figure 3C** illustrates the moment where the upstream pod enclosing part 2 is being moving from the closed position of Figure 3B to a pod ejection position as showed by arrow H.

**Figure 4A** is an isolated perspective view of the upstream pod enclosing part 2 of Figures 3A and 3B.

The upstream part defines an empty cage or cavity 21 for enclosing the pod body.

The upstream wall of the cage bears an upstream piercing arrangement 22 for opening the bottom wall 313 of the pod body. The upstream wall comprises at least one liquid injector 25 for supplying liquid into the pod through the holes opened in the bottom wall of the pod.

This upstream piercing arrangement can comprise piercers in the form of blades. These blades can be designed and positioned to pierce the wall of the bottom of the pod body when the upstream and downstream pod enclosing parts are brought to the closed position as in Figure 3B. The liquid injector 25, such as a shower at the upstream wall of the cage, can introduce the extracting liquid in the cage and through the pre-pierced openings.

**Figure 4B** is an isolated perspective view of the downstream pod enclosing part 2 of Figure 3A. The downstream part 1 defines a plate perpendicular (that is transverse) to the longitudinal axis XX'. This plate comprises a fixed central downstream plane piercing arrangement 12 for opening the lid 32 of the pod when the extracting liquid is introduced inside the pod and inflates the lid.

Usually, this central downstream plane piercing arrangement 12 is circular like the lid of the pod.

Opening happens by relative engagement of spikes with the lid under the effect of the rise in pressure of the injected liquid in the pod body chamber. This downstream plane piercing arrangement may comprise a rigid plate comprising opening elements 121 such as spikes, that can present the shape of cones, on its surface turned to the lid. In addition, the plate comprises traversing holes to evacuate the beverage dispensed from the opened lid to a tube or nozzle collecting and dispensing beverage to a drinking cup.

The downstream part 1 comprises a pod holder 11 that is attached to the peripheral area 13. While being attached the pod holder can be moved between two positions. In Figure 4B, the pod holder 11 is in the first position for receiving and holding the lid of the pod in front of the downstream plane piercing arrangement.

The pair of retaining elements 11a, 11b are movable from the receiving position to a second retracted position at the lateral sides of the downstream plane piercing arrangement.

**Figure 5** is a magnified view of the plate 12 and the opening elements 121 of the downstream plane piercing arrangement according to the preferred illustrated embodiment.

The opening elements are cones rising from the surface of the plate and presenting tip or pointed ends designed to pierce the layer of paper of the multilayer paper material when the downstream and upstream parts 1, 2 are moved to the closed position with the effect of pushing the lid of the pod against these cones.

This downstream plane piercing arrangement comprises traversing holes 122 which are designed so that their upstream ends - at the side of the plate that faces the pod - are provided in a part of the cones of opening elements 121. These upstream ends of the traversing holes extend from the bottoms of the cones along a part of the lateral faces of said cones. This design enables the dispensing of the beverage when the multilayer paper of the lid is thick.

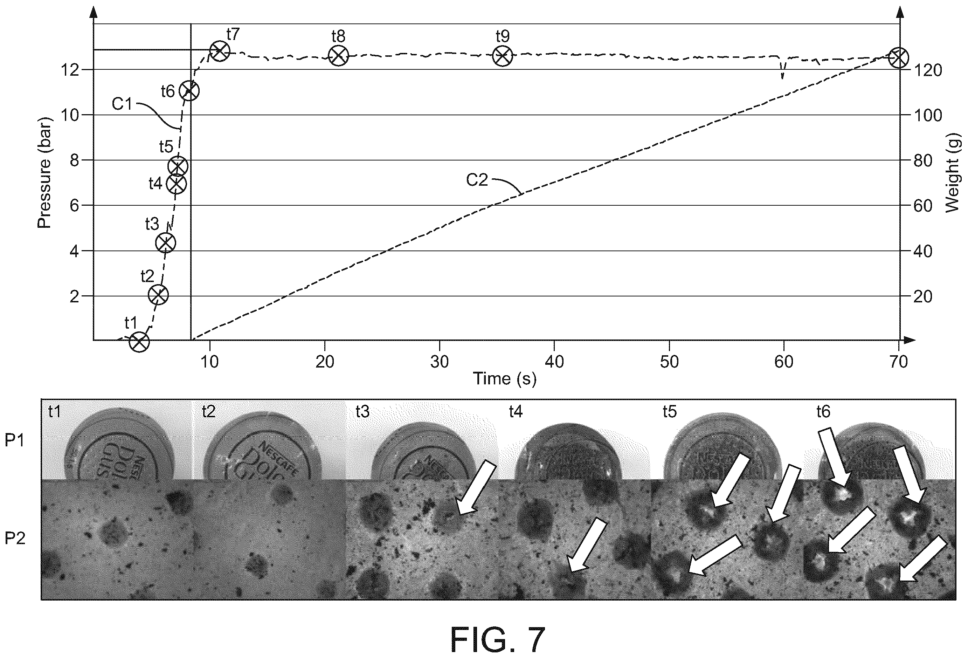

**Figure 7** provides curves in relation with the preparation of coffee from a pod comprising roast and ground coffee such as illustrated in Figure 1A within an extraction device presenting the features illustrated in Figures 2A to 6 and according to the invention.

Curve C1 corresponds to the curve of pressure measured inside the fluid system precisely after the heater and corresponding to the pressure of water inside the pod during the coffee preparation.

Curve C2 corresponds to the weight of coffee 91 received in the drinking cup 9, said cup being positioned on a scale.

In addition, Figure 7 provides photos of the pod at different times of the extraction. These photos were obtained by stopping the extraction at the corresponding time and taking a picture of :
- the external face of the second pod enclosing wall for the series P1 of photos,
- the internal face of the second pod enclosing wall after opening and dismantling of the pod for the series P2 of photos.

Photos were taken with a magnifier and with a light at the backside of the multilayer paper in order to see holes in the said paper if present.

The multilayer paper material of the bodies 31 of the pods presented a thickness of 195 µm and comprised :
- an external layer of paper A, and
- an internal plastic layer B comprising an internal barrier film positioned between two external polymer films, wherein :
   . the internal barrier film was a sheet of BVOH (Nichigo G-Polymer^{™} supplied by Nippon Goshei), and
   . both external polymer films were of the same nature and were polymer blends of polylactic acid (PLA), polybutylene succinate (PBS) and polybutylene adipate terephthalate (PBAT) (Ecovio^{®} 40 FS23N1 supplied by BASF).

The multilayer paper materials of the lids 32 of the pods presented a thickness of about 165 µm and comprised :
- an internal plastic layer B identical to the internal plastic layer used for the pod body,
- an intermediate layer of paper A presenting a lower thickness than the layer of paper used in the body multilayer paper material, and
- one external protective layer C made of regenerated cellulose (cellophane 23NE manufactured by Futamura).

The coffee pods were extracted with 110 ml of hot water at 78°C and supplied at a pressure comprised between 10 and 12 bars.

Based on Figure 7, it can be observed :
- at time t1, the two enclosing parts of the extraction device were moved to enclose the pod. On the external side of the lid, the protective layer and the external layer of paper are torn, but on the internal side of the lid, no piercing is apparent.
- at time t2, water is introduced in the pod and fills it. Pressure rises. The lid is still not pierced on its internal side but stretching of the plastic layer is apparent and can be felt by passing the finger on the surface of the lid.
- at time t3, water is still introduced and pressure goes on rising. The small recess just above t3 in the pressure curve C1 corresponds to the opening of the lid when the tip ends of the opening elements tear the internal surface of the lid further to its inflation and engagement with the opening elements. The black arrow at time t3 on the series P2 shows one of said tears. This first opening happens at a pressure of 5 bars which is optimal for the production of crema in the coffee.
- at times t4, t5, t6, water is still introduced and pressure goes on rising in the pod. Further tears are created on the internal surface of the lid and the surface of these tears become more and more bigger (see series P2 of photos and black arrows), which enables the dispensing of coffee : at t6, coffee starts dripping in the drinking cup as illustrated by curve C2.
- at times t7 to t9, the maximal pressure of about 12 bars is reached and coffee dispensing goes on regularly meaning no flow stops happen.

The curve C1 corresponds to an optimal preparation of lungo coffee from roast and ground coffee : it is neither under-extracted nor over-extracted and comprises a layer of crema.

The design of the above system presents the advantage of enabling a progressive piercing of the different layers of the second pod enclosing wall which guarantees an optimal preparation of an espresso coffee, in particular by pod opening at a pressure above 4 bars to provide crema and at a pressure below 10 bars to avoid long dispensing or even flow stop.

Other systems with different opening elements and different multilayer material can be designed in accordance with each other with the following conditions :
- in the first step of the preparation of a beverage, the opening elements pierce partially only the rmultilayer paper material so that at least the layer of plastic facing the internal part of the chamber of the pod is not pierced, and
- during the second step of the preparation of a beverage, the opening elements pierces totally the rmultilayer paper material by relative engagement under the effect of the rise in pressure of the injected liquid in the pod and inflation of the second enclosing wall lid against the opening elements.

Systems depend on the properties of each of the opening elements and the multilayer material. Following rules can be followed to design a system according to the invention :
- if the opening elements are not tip enough (such as truncated pyramids), the layer of paper may not be pierced at closure of the extraction device or the plastic layer may be unable to be torn.
- if the opening elements are too tip or too high compared to the thickness of the multilayer paper, they may pierce all the layers of the multilayer paper at the closure of the extraction device and pressure would not built up to produce crerma.
- if the paper layer if too thick for the opening elements, it may not be sufficiently pierced at closure of the extraction device and the full piercing of the multilayer paper may not be possible,
- if the plastic layer of the multilayer paper is too stretchable, it may never be torn or too late with the result of no dispensing or too long dispensing.
- if the plastic layer of the multilayer paper is not stretchable, it may be torn at the closure of the extraction device and pressure would not build up to produce crerma.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

### List of references in the drawings :

| | | | |
|---|---|---|---|
| downstream enclosing part | | | 1 |
| pod holder | | | 11 |
| downstream plate piercing arrangement | | | 12 |
| spikes | | | 121 |
| peripheral area | | | 13 |
| chassis | | | 14 |
| upstream enclosing part | | | 2 |
| | cage | | 21 |
| | upstream piercing arrangement | | 22 |
| | liquid injector | | 25 |
| pod | | | 3 |
| body | | | 31, 31' |
| | side wall | | 311 |
| | | top end | 3111 |
| | top opening | | 312 |
| | bottom wall | | 313 |
| | flange | | 314, 314' |
| | top face | | 3141 |
| | bottom face | | 3142 |
| lid | | | 32 |
| ingredient | | | 33 |
| insertion section | | | 4 |
| extraction chamber | | | 5 |
| lateral sheet | | | 6a, 6b |
| tank | | | 71 |
| pump | | | 72 |
| heater | | | 73 |
| control unit | | | 8 |
| drinking cup | | | 9 |
| coffee | | | 91 |

## Claims

1. System comprising a beverage preparation machine and a pod containing a beverage ingredient, preferably roast and ground coffee,
wherein the pod (3) comprises a first and a second enclosing walls (31, 31', 32), said first and second pod enclosing walls defining a chamber for enclosing the beverage ingredient (33), and
wherein said first and second pod enclosing walls of the pod are made of a multilayer paper material, said multilayer paper material comprising at least one layer of paper (A) assembled with at least one layer of plastic (B), preferably a compostable plastic layer, and
wherein said multilayer paper material is oriented so that at least one layer of plastic faces the internal part of the chamber of the pod,
and
wherein the beverage preparation machine comprises an extraction device for extracting a beverage from the pod, and said extraction device comprises :
- upstream and downstream pod enclosing parts (1, 2) relatively movable between an open position for inserting and/or ejecting the pod (3) and a closed position for forming an extraction chamber (5) enclosing the pod during extraction,
- the upstream part (2) bearing :
. an upstream piercing arrangement (22) for opening the first enclosing wall (31) of the pod and
. a liquid injector (25),
- the downstream part (1) comprising a downstream piercing arrangement (12) for opening the second enclosing wall (32) of the pod, said downstream piercing arrangement comprising a plate (121) wherein :
. the surface of said plate turned to the second wall of the pod comprises opening elements (122) rising from said surface, and
. said plate comprises traversing holes to evacuate the beverage dispensed from the opened second wall,
and
wherein, during the preparation of a beverage, the extraction device is configured :
- in a first step, to enclose the pod (3) between the upstream and downstream pod enclosing parts (1, 2), and
- then, in a second step, to introduce liquid inside the enclosed pod (3) through the liquid injector (23),
wherein the opening elements (122) of the downstream piercing arrangement and the multilayer material of the second enclosing wall (32) of the pod are designed so that :
- in the first step, the opening elements (122) pierce partially only the rmultilayer paper material so that at least the layer of plastic facing the internal part of the chamber of the pod is not pierced, and
- during the second step, the opening elements (122) pierces totally the rmultilayer paper material by relative engagement under the effect of the rise in pressure of the injected liquid in the pod and inflation of the second enclosing wall lid against the opening elements (122).

2. System according to Claim 1, wherein the opening elements (122) of the downstream piercing arrangement and the multilayer material of the second enclosing wall (32) of the pod are designed so that, in the first step, the opening elements (122) pierce only the paper layer of the rmultilayer paper material.

3. System according to Claim 1 or 2, wherein the opening elements (122) of the downstream piercing arrangement and the multilayer material of the second enclosing wall (32) of the pod are designed so that, during the second step, the opening elements (122) pierces totally the rmultilayer paper material by relative engagement with the second enclosing wall under the effect of the rise in pressure of the injected liquid in the pod and inflation of the second enclosing wall lid against the opening elements (122) after the pressure inside the pod reaches at least 3 bar, preferably at least 4 bars.

4. System according to any one of the precedent claims, wherein the opening elements (122) of the downstream piercing arrangement and the multilayer material of the second enclosing wall (32) of the pod are designed so that, during the second step, the opening elements (122) pierces totally the rmultilayer paper material by relative engagement with the second enclosing wall under the effect of the rise in pressure of the injected liquid in the pod and inflation of the second enclosing wall lid against the opening elements (122) before the pressure inside the pod reaches at most 10 bar, preferably at most 9 bars.

5. System according to any one of the precedent claims, wherein the opening elements of the downstream piercing arrangement are designed so as to present a tip end, and
wherein the layer of plastic (B) facing the internal part of the chamber of the pod :
- is stretchable by the tip end of the opening elements in the first step of the beverage preparation, and
- is torn by the tip end of the opening elements in the second step of the beverage preparation.

6. System according to any one of the precedent claims, wherein the extraction device is configured so that when the pod enclosing parts (1, 2) are moving one to the other to enclose the pod in the extraction chamber, at least a part of the extraction device pushes the pod so that the second enclosing wall of the pod is pressed against the opening elements of the downstream piercing arrangement (12).

7. System according to any one of the precedent claims, wherein the pod (3) contains a compacted beverage ingredient, preferably compacted roast and ground coffee.

8. System according to any one of the precedent claims, wherein the layer of plastic (A) facing the internal part of the chamber of the pod is selected in the list of :
- a polylactic acid (PLA) layer,
- a polybutylene succinate (PBS) layer,
- a polybutylene adipate terephthalate (PBAT) layer,
- a polyhydroxy alkanoate (PHA) layer,
- a polycaprolactone (PCL) layer,
- a layer of a polymer blend formed of any combination of above polymers.

9. System according to any one of the precedent claims, wherein the multilayer paper material comprises an additional layer, said layer being selected in the list of :
- a polyvinyl-alcohol copolymer (PVOH) layer, in particular a butenediol-vinyl-alcohol-copolymer (BVOH) layer,
- a polyglycolic acid (PGA) layer,
- a metallization coating,
- a SiOₓ based coating,
- an AlOₓ based coating,
- a combination thereof.

10. System according to the precedent claim, wherein the additional layer is a plastic polymer and the layer of plastic is a multilayer plastic, said multilayer plastic comprising said additional layer positioned between two external layers chosen among films of polylactic acid (PLA), polybutylene succinate (PBS), polyhydroxyalkanoates (PHA), polybutylene adipate terephthalate (PBAT), starch or any film of a polymer blend formed of any combination of said polymers.

11. System according to any one of the precedent claims, wherein :
- in the pod :
. the first enclosing wall is a pod body (31), said pod body comprising a side wall (311) and a bottom wall (313) defining the chamber and a circumferential annular body flange (314), said pod body containing the beverage ingredient, and
. the second enclosing wall is a top lid (32) attached to the circumferential flange, said top lid closing the top opening of the pod body,
and
- in the extraction device :
. the upstream part (2) defines a cage (21) designed to enclose the pod body (31) and bears an upstream piercing arrangement (22) for opening the bottom wall (313) of the pod,
. the downstream part (1) defines a plate transverse to the longitudinal axis (XX'), said plate comprising a downstream piercing arrangement (12) for opening the lid (32) of the pod,

12. System according to any one of Claims 1 to 9, wherein :
- in the pod :
. each of the first and second enclosing walls is a pod body (31), said pod body comprising a side wall (311) and a bottom wall (313) defining half of the chamber and a circumferential annular body flange (314), and
. the circumferential annular body flanges of said pod bodies are attached together,
and
- in the extraction device, the upstream and downstream parts (1, 2) define a cage (21) for enclosing the pod.

13. Use of a pod in the system according to any one of Claims 1 to 12, wherein :
said pod (3) comprising a first and a second enclosing walls (31, 31', 32), said first and second pod enclosing walls defining a chamber for enclosing the beverage ingredient (33), and
wherein said first and second pod enclosing walls of the pod are made of a multilayer paper material, said material comprising at least one layer of paper (A) assembled with at least one layer of plastic (B), preferably a compostable plastic layer, and
wherein said multilayer paper material is oriented so that at least one layer of plastic faces the internal part of the chamber of the pod, and
wherein said multilayer material of the second enclosing wall (32) of the pod is designed so that :
- when the upstream and downstream pod enclosing parts (1, 2) encloses the pod, the opening elements (122) pierce partially only the rmultilayer paper material so that at least the layer of plastic facing the internal part of the chamber of the pod is not pierced, and
- when liquid is introduces inside the enclosed pod (3), the opening elements (122) pierces totally the rmultilayer paper material by relative engagement under the effect of the rise in pressure of the injected liquid in the pod and inflation of the second enclosing wall lid against the opening elements (122).

## Patentansprüche

1. System, umfassend eine Getränkezubereitungsmaschine und eine Kapsel, die einen Getränkeinhaltsstoff enthält, vorzugsweise gerösteten und gemahlenen Kaffee,
wobei die Kapsel (3) eine erste und eine zweite umschließende Wand (31, 31', 32) umfasst, wobei die erste und die zweite Kapsel umschließende Wand eine Kammer zum Umschließen des Getränkeinhaltsstoffs (33) definieren, und
wobei die erste und die zweite Kapsel umschließende Wand der Kapsel aus einem mehrschichtigen Papiermaterial gefertigt sind, das mehrschichtige Papiermaterial umfassend mindestens eine Papierschicht (A), die mit mindestens einer Kunststoffschicht (B) zusammengefügt ist, vorzugsweise einer kompostierbaren Kunststoffschicht, und
wobei das mehrschichtige Papiermaterial ausgerichtet ist, sodass mindestens eine Kunststoffschicht dem inneren Teil der Kammer der Kapsel zugewandt ist,
und
wobei die Getränkezubereitungsmaschine eine Extraktionsvorrichtung zum Extrahieren eines Getränks aus der Kapsel umfasst, und die Extraktionsvorrichtung umfasst:
- einen stromaufwärtigen und eine stromabwärtigen Kapsel umschließenden Teil (1, 2), die zwischen einer offenen Position zum Einsetzen und/oder Auswerfen der Kapsel (3) und einer geschlossenen Position zum Ausbilden einer Extraktionskammer (5), die die Kapsel während einer Extraktion umschließt, relativ bewegbar sind,
- wobei der stromabwärtige Teil (2) trägt:
. eine stromaufwärtige Durchstechanordnung (22) zum Öffnen der ersten umschließenden Wand (31) der Kapsel und
. einen Flüssigkeitsinjektor (25),
- der stromabwärtige Teil (1) umfassend eine stromabwärtige Durchstechanordnung (12) zum Öffnen der zweiten umschließenden Wand (32) der Kapsel, die stromabwärtige Durchstechanordnung umfassend eine Platte (121), wobei:
. die Oberfläche der Platte, die der zweiten Wand der Kapsel zugewandt ist, Öffnungselemente (122) umfasst, die von der Oberfläche aufragen, und
. wobei die Platte Durchgangslöcher umfasst, um das Getränk, das aus der geöffneten zweiten Wand abgegeben wird, zu entleeren,
und
wobei, während der Zubereitung eines Getränks die Extraktionsvorrichtung konfiguriert ist:
- in einem ersten Schritt, die Kapsel (3) zwischen dem stromaufwärtigen und dem stromabwärtigen Kapsel umschließenden Teil (1, 2) zu umschließen, und
- dann, in einem zweiten Schritt, Flüssigkeit ins Innere der umschlossenen Kapsel (3) durch den Flüssigkeitsinjektor (23) einzuführen,
wobei die Öffnungselemente (122) der stromabwärtigen Durchstechanordnung und das mehrschichtige Material der zweiten umschließenden Wand (32) der Kapsel ausgelegt sind, sodass:
- in dem ersten Schritt die Öffnungselemente (122) das mehrschichtige Papiermaterial nur teilweise durchstechen, sodass mindestens die Kunststoffschicht, die dem inneren Teil der Kammer der Kapsel zugewandt ist, nicht durchstochen wird, und
- während des zweiten Schritts die Öffnungselemente (122) das mehrschichtige Papiermaterial vollständig durchstechen, durch relativen Eingriff unter der Wirkung des Druckanstiegs der eingespritzten Flüssigkeit in der Kapsel und Aufblähung des zweiten umschließenden Wanddeckels gegen die Öffnungselemente (122).

2. System nach Anspruch 1, wobei die Öffnungselemente (122) der stromabwärtigen Durchstechanordnung und das mehrschichtige Material der zweiten umschließenden Wand (32) der Kapsel ausgelegt sind, sodass in dem ersten Schritt die Öffnungselemente (122) nur die Papierschicht des mehrschichtigen Papiermaterials durchstechen.

3. System nach Anspruch 1 oder 2, wobei die Öffnungselemente (122) der stromabwärtigen Durchstechanordnung und das mehrschichtige Material der zweiten umschließenden Wand (32) der Kapsel ausgelegt sind, sodass während des zweiten Schritts die Öffnungselemente (122) das mehrschichtige Papiermaterial vollständig durchstechen, durch relativen Eingriff mit der zweiten umschließenden Wand unter der Wirkung des Druckanstiegs der eingespritzten Flüssigkeit in der Kapsel und Aufblähung des zweiten umschließenden Wanddeckels gegen die Öffnungselemente (122), nachdem der Druck im Inneren der Kapsel mindestens 3 bar, vorzugsweise mindestens 4 bar erreicht.

4. System nach einem der vorstehenden Ansprüche, wobei die Öffnungselemente (122) der stromabwärtigen Durchstechanordnung und das mehrschichtige Material der zweiten umschließenden Wand (32) der Kapsel ausgelegt sind, sodass während des zweiten Schritts die Öffnungselemente (122) das mehrschichtige Papiermaterial vollständig durchstechen, durch relativen Eingriff mit der zweiten umschließenden Wand unter der Wirkung des Druckanstiegs der eingespritzten Flüssigkeit in der Kapsel und Aufblähung des zweiten umschließenden Wanddeckels gegen die Öffnungselemente (122), bevor der Druck im Inneren der Kapsel höchstens 10 bar, vorzugsweise höchstens 9 bar erreicht.

5. System nach einem der vorstehenden Ansprüche, wobei die Öffnungselemente der stromabwärtigen Durchstechanordnung ausgelegt sind, um ein Spitzenende vorzuweisen, und
wobei die Kunststoffschicht (B), die dem inneren Teil der Kammer der Kapsel zugewandt ist:
- durch das Spitzenende der Öffnungselemente in dem ersten Schritt der Getränkezubereitung dehnbar ist, und
- durch das Spitzenende der Öffnungselemente in dem zweiten Schritt der Getränkezubereitung aufgerissen wird.

6. System nach einem der vorstehenden Ansprüche, wobei die Extraktionsvorrichtung konfiguriert ist, sodass, wenn sich die Kapsel umschließenden Teile (1, 2) aufeinander zu bewegen, um die Kapsel in der Extraktionskammer zu umschließen, mindestens ein Teil der Extraktionsvorrichtung die Kapsel schiebt, sodass die zweite umschließende Wand der Kapsel gegen die Öffnungselemente der stromabwärtigen Durchstechanordnung (12) gedrückt wird.

7. System nach einem der vorstehenden Ansprüche, wobei die Kapsel (3) einen kompaktierten Getränkeinhaltsstoff, vorzugsweise kompaktierten gerösteten und gemahlenen Kaffee, enthält.

8. System nach einem der vorstehenden Ansprüche, wobei die Kunststoffschicht (A), die dem inneren Teil der Kammer der Kapsel zugewandt ist, aus der Liste ausgewählt ist von:
- einer Schicht aus Polymilchsäure (PLA),
- einer Schicht aus Polybutylensuccinat (PBS),
- einer Schicht aus Polybutylenadipat-Terephthalat (PBAT),
- einer Schicht aus Polyhydroxyalkanoat (PHA),
- einer Schicht aus Polycaprolacton (PCL),
- einer Schicht aus einer Polymermischung, die aus einer beliebigen Kombination der vorstehenden Polymere ausgebildet ist.

9. System nach einem der vorstehenden Ansprüche, wobei das mehrschichtige Papiermaterial eine zusätzliche Schicht umfasst, wobei diese Schicht aus der Liste ausgewählt ist von:
- einer Schicht aus Polyvinylalkohol-Copolymer-(PVOH-)Schicht, insbesondere einer Schicht aus Butendiol-Vinylalkohol-Copolymer-(BVOH-),
- einer Schicht aus Polyglykolsäure (PGA),
- einer Metallisierungsbeschichtung,
- einer SiOₓ-basierten Beschichtung,
- einer AlOₓ-basierten Beschichtung,
- oder einer Kombination davon.

10. System nach dem vorstehenden Anspruch, wobei die zusätzliche Schicht ein Kunststoffpolymer ist und die Kunststoffschicht ein mehrschichtiger Kunststoff ist, der mehrschichtige Kunststoff umfassend die zusätzliche Schicht, die zwischen zwei äußeren Schichten positioniert ist, die ausgewählt sind aus Folien aus Polymilchsäure (PLA), Polybutylensuccinat (PBS), Polyhydroxyalkanoaten (PHA), Polybutylen-Adipat-Terephthalat (PBAT), Stärke oder einer beliebigen Folie einer Polymermischung, die aus einer beliebigen Kombination der Polymere ausgebildet ist.

11. Verfahren nach einem der vorstehenden Ansprüche, wobei:
- in der Kapsel:
. die erste umschließende Wand ein Kapselkörper (31) ist, der Kapselkörper umfassend eine Seitenwand (311) und eine Bodenwand (313), die die Kammer definieren, und einen umlaufenden ringförmigen Körperflansch (314), wobei der Kapselkörper den Getränkeinhaltsstoff enthält, und
. die zweite umschließende Wand ein oberer Deckel (32) ist, der an dem umlaufenden Flansch angebracht ist, wobei der obere Deckel die obere Öffnung des Kapselkörpers schließt,
und
- in der Extraktionsvorrichtung:
. der stromaufwärtige Teil (2) ein Gerippe (21) definiert, das ausgelegt ist, um den Kapselkörper (31) zu umschließen und eine stromaufwärtige Durchstechanordnung (22) zum Öffnen der Bodenwand (313) der Kapsel trägt,
. wobei das stromabwärtige Teil (1) eine Platte quer zu der Längsachse (XX') definiert, die Platte umfassend eine stromabwärtige Durchstechanordnung (12) zum Öffnen des Deckels (32) der Kapsel,

12. System nach einem der Ansprüche 1 bis 9, wobei:
- in der Kapsel:
. jede der ersten und der zweiten umschließenden Wand ein Kapselkörper (31) ist, der Kapselkörper umfassend eine Seitenwand (311) und eine Bodenwand (313), die die Hälfte der Kammer und einen umlaufenden ringförmigen Körperflansch (314) definieren, und
. die umlaufenden ringförmigen Körperflansche der Hülsenkörper aneinander befestigt sind, und
- in der Extraktionsvorrichtung der stromaufwärtige und der stromabwärtige Teil (1, 2) ein Gerippe (21) zum Einschließen der Kapsel definieren.

13. Verwendung einer Kapsel in dem System nach einem der Ansprüche 1 bis 12, wobei:
die Kapsel (3) umfassend eine erste und eine zweite umschließende Wand (31, 31', 32), wobei die erste und zweite Kapsel umschließende Wand eine Kammer zum Umschließen des Getränkeinhaltsstoff (33) definieren, und
wobei die erste und die zweite Kapsel umschließende Wand der Kapsel aus einem mehrschichtigen Papiermaterial gefertigt sind, das Material umfassend mindestens eine Papierschicht (A), die mit mindestens einer Kunststoffschicht (B) zusammengefügt ist, vorzugsweise einer kompostierbaren Kunststoffschicht, und
wobei das mehrschichtige Papiermaterial ausgerichtet ist, sodass mindestens eine Kunststoffschicht dem inneren Teil der Kammer der Kapsel zugewandt ist, und
wobei das mehrschichtige Material der zweiten umschließenden Wand (32) der Kapsel ausgelegt ist, sodass:
- wenn der stromaufwärtige und der stromabwärtige Kapsel umschließende Teil (1, 2) die Kapsel umschließen, die Öffnungselemente (122) nur teilweise das mehrschichtige Papiermaterial durchstechen, sodass mindestens die Kunststoffschicht, die dem inneren Teil der Kammer der Kapsel zugewandt ist, nicht durchstochen wird, und
- wenn Flüssigkeit ins Innere der umschlossenen Kapsel (3) eingeführt wird, die Öffnungselemente (122) das mehrschichtige Papiermaterial vollständig durchstechen, durch relativen Eingriff unter der Wirkung des Druckanstiegs der eingespritzten Flüssigkeit in der Kapsel und Aufblähung des zweiten umschließenden Wanddeckels gegen die Öffnungselemente (122).

## Revendications

1. Système comprenant une machine de préparation de boisson et une capsule contenant un ingrédient de boisson, de préférence du café torréfié et moulu,
dans lequel la capsule (3) comprend une première et une seconde paroi d'enceinte (31, 31', 32), lesdites première et seconde parois d'enceinte de capsule définissant une chambre pour enfermer l'ingrédient de boisson (33), et
dans lequel lesdites première et seconde parois d'enceinte de la capsule sont constituées d'un matériau papier multicouche, ledit matériau papier multicouche comprenant au moins une couche de papier (A) assemblée avec au moins une couche de plastique (B), de préférence une couche de plastique compostable, et
dans lequel ledit matériau papier multicouche est orienté de sorte qu'au moins une couche de plastique fait face à la partie interne de la chambre de la capsule,
et
dans lequel la machine de préparation de boisson comprend un dispositif d'extraction pour extraire une boisson de la capsule, et ledit dispositif d'extraction comprend :
. des parties d'enceinte de capsule amont et aval (1, 2) relativement mobiles entre une position ouverte pour l'insertion et/ou l'éjection de la capsule (3) et une position fermée pour former une chambre d'extraction (5) enfermant la capsule pendant l'extraction,
- la partie amont (2) portant :
. un agencement de perçage amont (22) pour ouvrir la première paroi d'enceinte (31) de la capsule, et
- un injecteur de liquide (25),
- la partie aval (1) comprenant un agencement de perçage aval (12) pour ouvrir la seconde paroi d'enceinte (32) de la capsule, ledit agencement de perçage aval comprenant une plaque (121), dans lequel :
. la surface de ladite plaque tournée vers la seconde paroi de la capsule comprend des éléments d'ouverture (122) s'élevant de ladite surface, et
. ladite plaque comprend des trous traversants pour évacuer la boisson distribuée depuis la seconde paroi ouverte,
et
dans lequel, pendant la préparation d'une boisson, le dispositif d'extraction est conçu :
- dans une première étape, pour enfermer la capsule (3) entre les parties d'enceinte de capsule amont et aval (1, 2), et
- ensuite, dans une seconde étape, pour introduire un liquide à l'intérieur de la capsule enfermée (3) par l'intermédiaire de l'injecteur de liquide (23),
dans lequel les éléments d'ouverture (122) de l'agencement de perçage aval et le matériau multicouche de la seconde paroi d'enceinte (32) de la capsule sont conçus de sorte que :
- dans la première étape, les éléments d'ouverture (122) ne percent que partiellement le matériau papier multicouche de sorte qu'au moins la couche de plastique faisant face à la partie interne de la chambre de la capsule n'est pas percée, et
- pendant la seconde étape, les éléments d'ouverture (122) percent totalement le matériau papier multicouche par mise en prise relative sous l'effet de la montée en pression du liquide injecté dans la capsule et du gonflement du couvercle de la seconde paroi d'enceinte contre les éléments d'ouverture (122).

2. Système selon la revendication 1, dans lequel les éléments d'ouverture (122) de l'agencement de perçage aval et le matériau multicouche de la seconde paroi d'enceinte (32) de la capsule sont conçus de sorte que, dans la première étape, les éléments d'ouverture (122) ne percent que la couche de papier du matériau papier multicouche.

3. Système selon la revendication 1 ou 2, dans lequel les éléments d'ouverture (122) de l'agencement de perçage aval et le matériau multicouche de la seconde paroi d'enceinte (32) de la capsule sont conçus de sorte que, pendant la seconde étape, les éléments d'ouverture (122) percent totalement le matériau papier multicouche par mise en prise relative avec la seconde paroi d'enceinte sous l'effet de l'augmentation de la pression du liquide injecté dans la capsule et du gonflement du couvercle de la seconde paroi d'enceinte contre les éléments d'ouverture (122) après que la pression à l'intérieur de la capsule atteint au moins 3 bar, de préférence au moins 4 bar.

4. Système selon l'une quelconque des revendications précédentes, dans lequel les éléments d'ouverture (122) de l'agencement de perçage aval et le matériau multicouche de la seconde paroi d'enceinte (32) de la capsule sont conçus de sorte que, pendant la seconde étape, les éléments d'ouverture (122) percent totalement le matériau papier multicouche par mise en prise relative avec la seconde paroi d'enceinte sous l'effet de l'augmentation de la pression du liquide injecté dans la capsule et du gonflement du couvercle de la seconde paroi d'enceinte contre les éléments d'ouverture (122) avant que la pression à l'intérieur de la capsule n'atteigne au plus 10 bar, de préférence au plus 9 bar.

5. Système selon l'une quelconque des revendications précédentes, dans lequel les éléments d'ouverture de l'agencement de perçage aval sont conçus de manière à présenter une extrémité en pointe, et
dans lequel la couche de plastique (B) faisant face à la partie interne de la chambre de la capsule :
- est étirable par l'extrémité en pointe des éléments d'ouverture dans la première étape de la préparation de boisson, et
- est déchirée par l'extrémité en pointe des éléments d'ouverture dans la seconde étape de la préparation de boisson.

6. Système selon l'une quelconque des revendications précédentes, dans lequel le dispositif d'extraction est conçu de sorte que lorsque les parties d'enceinte de capsule (1, 2) se déplacent l'une vers l'autre pour enfermer la capsule dans la chambre d'extraction, au moins une partie du dispositif d'extraction pousse la capsule de sorte que la seconde paroi d'enceinte de la capsule est pressée contre les éléments d'ouverture de l'agencement de perçage aval (12).

7. Système selon l'une quelconque des revendications précédentes, dans lequel la capsule (3) contient un ingrédient de boisson compacté, de préférence du café torréfié et moulu compacté.

8. Système selon l'une quelconque des revendications précédentes, dans lequel la couche de plastique (A) faisant face à la partie interne de la chambre de la capsule est choisie dans la liste suivante :
- une couche d'acide polylactique (PLA),
- une couche polybutylène succinate (PBS),
- une couche polybutylène adipate téréphtalate (PBAT),
- une couche de polyhydroxyalcanoate (PHA),
- une couche de polycaprolactone (PCL),
- une couche d'un mélange de polymères formé de toute combinaison des polymères ci-dessus.

9. Système selon l'une quelconque des revendications précédentes, dans lequel le matériau papier multicouche comprend une couche supplémentaire, ladite couche étant choisie dans la liste suivante :
- une couche de copolymère d'alcool polyvinylique (PVOH), en particulier une couche copolymère de butènediol-alcool vinylique (BVOH),
- une couche d'acide polyglycolique (PGA),
- un revêtement de métallisation,
- un revêtement à base de SiOₓ,
- un revêtement à base d'AlOx,
- ou une combinaison de ceux-ci.

10. Système selon la revendication précédente, dans lequel la couche supplémentaire est un polymère plastique et la couche de plastique est un plastique multicouche, ledit plastique multicouche comprenant ladite couche supplémentaire positionnée entre deux couches externes choisies parmi des films d'acide polylactique (PLA), de polybutylène succinate (PBS), de polyhydroxyalcanoates (PHA), de polybutylène adipate téréphtalate (PBAT), d'amidon ou tout film d'un mélange de polymères formé de toute combinaison desdits polymères.

11. Système selon l'une quelconque des revendications précédentes, dans lequel :
- dans la capsule :
. la première paroi d'enceinte est un corps de capsule (31), ledit corps de capsule comprenant une paroi latérale (311) et une paroi de fond (313) définissant la chambre et une collerette de corps annulaire circonférentielle (314), ledit corps de capsule contenant l'ingrédient de boisson, et
. la seconde paroi d'enceinte est un couvercle supérieur (32) fixé à la collerette circonférentielle, ledit couvercle supérieur fermant l'ouverture supérieure du corps de capsule,
et
- dans le dispositif d'extraction :
. la partie amont (2) définit une cage (21) conçue pour enfermer le corps de capsule (31) et porte un agencement de perçage amont (22) pour ouvrir la paroi de fond (313) de la capsule,
. la partie aval (1) définit une plaque transversale à l'axe longitudinal (XX'), ladite plaque comprenant un agencement de perçage aval (12) pour ouvrir le couvercle (32) de la capsule,

12. Système selon l'une quelconque des revendications 1 à 9, dans lequel :
- dans la capsule :
. chacune des première et seconde parois d'enceinte est un corps de capsule (31), ledit corps de capsule comprenant une paroi latérale (311) et une paroi de fond (313) définissant la moitié de la chambre et une collerette de corps annulaire circonférentielle (314), et
. les collerettes de corps annulaires circonférentielles desdits corps de capsules sont fixées ensemble, et
- dans le dispositif d'extraction, les parties amont et aval (1, 2) définissent une cage (21) pour enfermer la capsule.

13. Utilisation d'une capsule dans le système selon l'une quelconque des revendications 1 à 12, dans laquelle :
ladite capsule (3) comprenant une première et une seconde paroi d'enceinte (31, 31', 32), lesdites première et seconde parois d'enceinte de capsule définissant une chambre pour enfermer l'ingrédient de boisson (33), et
dans laquelle lesdites première et seconde parois d'enceinte de la capsule sont constituées d'un matériau papier multicouche, ledit matériau comprenant au moins une couche de papier (A) assemblée avec au moins une couche de plastique (B), de préférence une couche de plastique compostable, et
dans laquelle ledit matériau papier multicouche est orienté de sorte qu'au moins une couche de plastique fait face à la partie interne de la chambre de la capsule, et
dans laquelle ledit matériau multicouche de la seconde paroi d'enceinte (32) de la capsule est conçu de sorte que :
- lorsque les parties d'enceinte de capsule amont et aval (1, 2) enferment la capsule, les éléments d'ouverture (122) ne percent partiellement que le matériau papier multicouche de sorte qu'au moins la couche de plastique faisant face à la partie interne de la chambre de la capsule n'est pas percée, et
- lorsque du liquide est introduit à l'intérieur de la capsule enfermée (3), les éléments d'ouverture (122) percent totalement le matériau papier multicouche par mise en prise relative sous l'effet de l'augmentation de la pression du liquide injecté dans la capsule et du gonflement du couvercle de la seconde paroi d'enceinte contre les éléments d'ouverture (122).
